(19) Europäisches Patentamt
European Patent Office
Office européen des brevets

(11) **EP 4 156 950 B1**

(12) **EUROPEAN PATENT SPECIFICATION**

(45) Date of publication and mention
of the grant of the patent:
**28.05.2025 Bulletin 2025/22**

(21) Application number: **21727880.3**

(22) Date of filing: **25.05.2021**

(51) International Patent Classification (IPC):
*A23C 11/00* (2025.01)    *A23C 11/04* (2025.01)
*A23L 29/212* (2016.01)    *A23L 29/256* (2016.01)
*A23L 29/262* (2016.01)

(52) Cooperative Patent Classification (CPC):
**A23B 11/12; A23C 11/00; A23C 11/04;
A23L 29/212; A23L 29/256; A23L 29/262**

(86) International application number:
**PCT/EP2021/063864**

(87) International publication number:
**WO 2021/239714 (02.12.2021 Gazette 2021/48)**

(54) **FOAMING CREAMER**

SCHÄUMENDER KAFFEEWEISSER

CRÈME MOUSSANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2020 US 202063029895 P
13.08.2020 EP 20190967**

(43) Date of publication of application:
**05.04.2023 Bulletin 2023/14**

(73) Proprietor: **Société des Produits Nestlé S.A.
1800 Vevey (CH)**

(72) Inventors:
• **ALDAPE FARIAS, Guadalupe Del Carmen
Columbus, OHIO 43235 (US)**
• **GUNES, Zeynel Deniz
1000 Lausanne 27 (CH)**
• **D'ORIA, Gabriele
1012 Lausanne (CH)**
• **ZHENG, Ying
Dublin, OH Ohio 43017 (US)**
• **SAHAI, Deepak
Plain City, OH Ohio 43064 (US)**

(74) Representative: **Vossius & Partner
Patentanwälte Rechtsanwälte mbB
Siebertstraße 3
81675 München (DE)**

(56) References cited:
EP-A1- 1 226 761    WO-A1-2017/211971
US-A1- 2004 156 979

• DATABASE GNPD [online] MINTEL; 9 May 2011
(2011-05-09), ANONYMOUS: "Milk Foam For
Coffee", XP055735943, retrieved from https://
www.gnpd.com/sinatra/recordpage/1541695/
Database accession no. 1541695
• DATABASE GNPD [online] MINTEL; 15 May 2019
(2019-05-15), ANONYMOUS: "Foamable Soya
Creamer for Coffee", XP055735945, retrieved
from https://www.gnpd.com/sinatra/recordpage/
6517995/ Database accession no. 6517995
• DATABASE GNPD MINTEL; 9 May 2011
(2011-05-09), ANONYMOUS: "Milk Foam For
Coffee"
• DATABASE GNPD MINTEL; 15 May 2019
(2019-05-15), ANONYMOUS: "Foamable Soya
Creamer for Coffee"
• DATABASE GNPD [online] MINTEL; 9 May 2011
(2011-05-09), ANONYMOUS: "Milk Foam For
Coffee", XP055735943, Database accession no.
1541695

- **DATABASE GNPD [online] MINTEL; 15 May 2019 (2019-05-15), ANONYMOUS: "Foamable Soya Creamer for Coffee", XP055735945, Database accession no. 6517995**

**Description**

**Field of the invention**

The present invention relates to creamers for food products such as coffee and tea. In particular, the invention relates to a foaming liquid creamer that provides a foam layer when added to a beverage.

**Background of the invention**

Creamers are widely used as whitening agents with hot and cold beverages such as, for example, coffee, cocoa, malt beverages and tea. They are commonly used in place of milk and/or dairy cream. Creamers may come in a variety of different flavours and provide mouthfeel, whitening, body, and a smooth texture. Creamers can be in liquid or powder forms. A liquid creamer may be intended for storage at ambient temperatures or under refrigeration, and should be stable during storage without phase separation, creaming, gelation, sedimentation or development of undesirable flavours. The liquid creamer should also retain a constant viscosity over time.

In cafés, consumers enjoy freshly prepared foamed "milks" which are poured on top of hot or cold beverages. The "milks" may be conventional dairy milk, but can also be plant based milks such as almond or soy milk. The foamed milks are appreciated for their indulgent texture and/or mouthfeel. However, this texture depends strongly on a beverages gas dispersion properties, such as bubble size and distribution, and the origin of the bubbles. Freshly foamed milks are generally prepared using mechanical mixers or steam wands and have a foam which collapses after a few minutes. Such foams are not suitable as portable packaged beverage products with long term storage.

Over the recent years, packaged liquid creamers have gained a significant popularity. Such packaged liquid creamers may be shelf-stable at ambient temperatures, for instance during 3 months at temperatures ranging from 15°C to 35°C. In order to avoid biological spoilage, such beverages typically undergo heat treatments, which have a strong impact on stability, and may provoke gelation, syneresis and other undesirable physical evolution over shelf life.

Creamers may be packaged in pressurized cans with a propellant gas such as nitrous oxide which provides a foam when the liquid creamer passed through a dispensing nozzle. Typically the foam is stabilized by fat globules, in a similar manner to whipping cream. However, pressurized cans are heavy and relatively expensive. High fat levels are also not desired by many consumers.

"Clean label" is a growing trend in the food industry as more and more consumers look for products with a short ingredient list of familiar and less processed ingredients. It is of significant importance to find technical solutions to remove ingredients that are not accepted by consumers and to reduce the number of ingredients that are perceived as artificial. Consumers are also critical of products which they consider to be over-packaged, especially if the packaging is for a single-use.

It would be desirable to provide liquid creamers which can be aerated to form a foam upon shaking by hand. Such liquid creamers should maintain quality and stability during product shelf life and provide unique sensorial aerated texture and/or mouthfeel characteristics after shaking. The foam generated in a container by shaking should be able to be easily poured out of the bottle.

EP 1 226 761 A1 discloses a milk product containing from 0 to 30 % fat, from 5 to 23 % solid non fat, other ingredients and water, wherein said product can be foamed at room temperature either by shaking or with a foaming device, said product containing further a mixture of three emulsifiers and a foam stabilizer. WO 2017/211971 A1 discloses a ready-to-drink beverage composition comprising a nut component comprising a nut protein and a dairy component comprising a dairy protein; and a hydrocolloid component comprising a cellulose and a gellan gum, wherein when the beverage is shaken, the beverage forms foam.

The inventors have found it desirable to overcome or ameliorate at least one of the disadvantages of the prior art, or at least to provide a useful alternative. For example, the inventors have set themselves to create a creamer with good storage stability under ambient or refrigerated conditions and which can provide a pleasant foam upon shaking.

A foaming creamer should not only provide an attractive foam, but it should also provide good sensorial properties in the beverage to which it is added. Many liquid creamers experience physical separation in low pH and high mineral content beverages, especially when added to high temperature beverages. The physical separation is often referred to as flocculation, curdling, clumping, aggregation or sedimentation. This phenomenon is related first to the discharge of emulsion droplets then the aggregation of the droplets. There is a need to provide liquid creamers that have an ingredient list attractive to consumers and yet are stable during shelf life and provide good sensorial properties without any physical instability when added to beverages. In addition, the liquid creamer must perform well when added to beverages brewed by consumers using water with a wide range of different hardness levels (for example water with different levels of dissolved calcium and magnesium).

When added to cold or hot beverages the foamed liquid creamer should disperse rapidly into the beverage liquid to provide whitening with no feathering or sedimentation, but the foam should rise to the surface to provide a visually attractive foam layer above the beverage. The liquid creamer should remain stable with no sedimentation while providing a superior taste and mouthfeel.

More and more consumers are concerned by synthetic or artificial additives in food products. Thus, there is a demand for commercially available foaming liquid creamers which are free from synthetic ingredients or ingredients that the consumer may perceive as synthetic. Many consumers would prefer not to consume products containing synthetic emulsifiers or phosphate buffers. However, these are typically needed to guarantee the physical stability of the liquid creamer over the shelf life of the product, good foamability and stability after pouring into a beverage such as coffee. In addition, they are needed to achieve the desired whitening and texture/mouthfeel effect in the beverage.

## Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a foaming liquid creamer comprising protein and fat wherein the protein is present at a level from 1 to 6 %; the fat is present at a level from 1 to 8 %; the foaming liquid creamer contains less than 0.01% of monoacylglycerols, diacylglycerols, diacetylated tartaric acid esters of monoglycerides, propylene glycol monostearate and sorbitan tristearate; and the foaming liquid creamer in an un-foamed state has a viscosity at 4°C of between 5 and 90 mPas; the foaming liquid creamer comprises starch at a level from 0.1 to 2.5 %;

wherein the foaming liquid creamer comprises cellulose at a level from 0.1 to 0.3 % and alginate at a level from 0.1 to 0.3 % as a weight percentage of the foaming liquid creamer;
all percentages being as a weight percentage of the foaming liquid creamer.

In a second aspect, the invention provides a process of preparing the liquid creamer of the invention comprising; mixing the composition of the foaming liquid creamer at a solids content from 20 to 40 %; sterilizing the resulting liquid using ultra-high temperature (UHT) treatment; homogenizing the liquid; wherein the homogenization is performed before UHT treatment, after UHT treatment, or before and after UHT treatment.

A third aspect of the invention relates to a packaged foaming liquid creamer comprising the foaming liquid creamer of the invention within a closed container, the closed container having a headspace, wherein the headspace represents from 15 to 40% of the internal volume of the container.

Ready-to-drink beverages are known which are foamed by hand shaking in the bottle to produce a homogeneous bubbly liquid. The bubbles present throughout the beverage provide a pleasant texture. However, such foaming beverages are not suitable as foaming liquid creamers. When shaken to form a foam and added to a hot beverage, the foam just sinks into the hot beverage and does not form a foam layer on the surface. It was surprisingly found that, in order to generate an optimal foam layer, the viscosity of the foaming liquid creamer must be carefully controlled. The inventors have found that the foaming liquid creamer of the invention solves these problems and delivers a foam on shaking that can be poured out of a container such as a bottle and which forms a foam layer on top of a beverage, such as a hot beverage, for example tea or coffee. A foam can be obtained without the need for mechanical mixing or a steam wand.

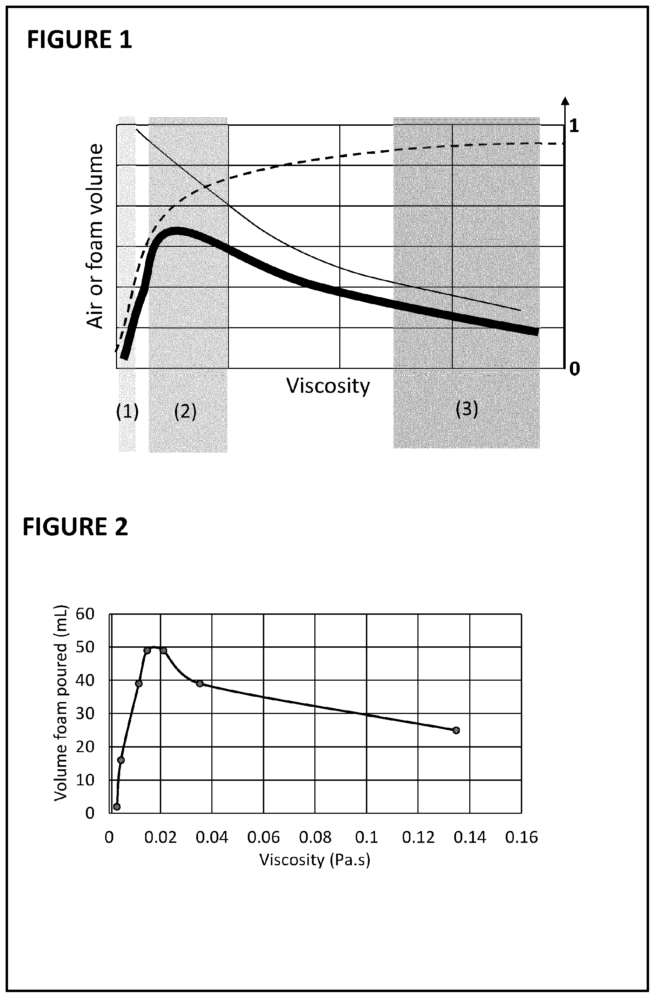

Conventionally it might be considered that the more viscous the foaming liquid, the better the foam produced. On shaking a foaming liquid in a bottle, a proportion of the air bubbles will be in the main liquid and a proportion will form a foam on top of the liquid. Without wishing to be bound by theory, the inventors found that as the viscosity of the foaming liquid creamer increased, the fraction of the bubbles in the main liquid increased, as schematically shown in Figure 1 (broken line). A high proportion of bubbles in the main liquid does not provide a good foam layer when poured onto a beverage as the foamed liquid mixes into the beverage without forming a foam on top. With increasing viscosity, the amount of air in the foam decreases, as schematically shown in Figure 1 (thin continuous line). Reducing the viscosity of the foaming liquid creamer increases the amount of foam that is poured out of the bottle after shaking, as schematically shown in Figure 1 (thick continuous line). However, if the viscosity of the liquid foaming creamer is too low, the air bubbles in the foam rapidly move to the surface (a process called creaming) whilst still in the bottle, then form a foam that stays on the liquid surface and in the bottle when pouring the creamer out, so the bubbles are not transferred to the beverage cup; the liquid tends to pour out of the bottle in preference, leaving the foam behind.

## Brief Description of the Drawings

Figure 1 is a schematic representation of how changing the viscosity of a foaming liquid creamer shaken in a bottle affects the air incorporation and foam volume poured out of the bottle. The x-axis is viscosity of the foaming creamer, y-axis (left-hand side) is the air or foam volume, the thick continuous line is the foam volume poured out, the thin continuous line is the air incorporated by shaking, the thin broken line is the fraction of bubbles in the main liquid (corresponding to right-hand y-axis). Shaded area (1) indicates fast foam creaming, shaded area (2) indicates best performance as a foaming liquid creamer and shaded area (3) indicates poor air incorporation in the foam.

Figure 2 shows the impact of viscosity on the volume of foam poured out of a bottle of foaming liquid creamer as described in Example 1. The x-axis is viscosity in Pa.s and the y-axis is the volume of foam poured in mL.

Figure 3 shows coffees with added foaming liquid creamers after shaking in the bottle (Example 2). The foaming liquid creamers have different levels of starch; H 1%, I 1.5%, J 3.5% and K 4%. Figure 3a is a side view and figure 3b is a top view.

Figure 4 shows coffees with added foaming liquid creamers after shaking in the bottle (Example 3). The foaming liquid creamers have different levels of microcrystalline cellulose and alginate, increasing from L to N. Figure 4a is a side view and figure 4b is a top view.

**Detailed Description of the invention**

Consequently the present invention relates in part to a foaming liquid creamer comprising protein and fat wherein the protein is present at a level from 1 to 6 % (for example from 1.5 to 3.5 %, for further example from 2.4 to 3 %); the fat is present at a level from 1 to 8 % (for example from 3 to 7 %, for further example from 4.5 to 6 %); the foaming liquid creamer contains less than 0.01% of monoacylglycerols, diacylglycerols, diacetylated tartaric acid esters of monoglycerides, propylene glycol monostearate and sorbitan tristearate; and the foaming liquid creamer in an un-foamed state has a viscosity at 4°C of between 5 and 90 mPa.s (for example between 7 and 80 mPa.s, for further example between 8 and 70 mPa.s, for further example between 10 and 50 mPa.s, for still further example between 15 and 25 mPa.s); all percentages being as a weight percentage of the foaming liquid creamer.

The viscosity at 4°C in the un-foamed state (e.g. before shaking) may be measured at a shear rate of 75/s. For example the viscosity may be measured with a Physica MCR 302 rheometer (Anton Paar GmbH, Austria). The geometry may be double-gap.

Usually, maintaining a foamed texture over shelf life requires the use of relatively high amounts of additives to stabilise the foam. However, additives are not always accepted by consumers. In addition, the mouth-feel of shelf-stable foamed creamer may be less pleasant than that of a freshly prepared foamed creamer. Rather than ensuring that the liquid creamer retains an aerated texture over the whole shelf life, the inventors have reversed the problem and now provide a non-aerated liquid creamer, which has a pleasant aerated texture during consumption by shaking the liquid creamer before consumption. The aerated texture is obtained by shaking the liquid creamer in its closed container, for instance by hand.

An advantage is that it is not necessary to be concerned about stability of the aeration over long-term storage. Only the shelf stability of the non-aerated creamer is a concern.

Advantageously, the foaming liquid creamer of the invention has good foamability and storage stability without requiring emulsifiers that may be badly perceived by consumers. For example it may be stable during storage at refrigeration and ambient temperatures for at least 6 months. For example it may provide a foam which is stable when added to cold or hot coffee. The foaming liquid creamer contains less than 0.01 wt.% of monoacylglycerols (MAG), diacylglycerols (DAG), diacetylated tartaric acid esters of monoglycerides (DATEM), Propylene Glycol Monostearate (PGMS) and sorbitan tristearate (STS). For example, the foaming liquid creamer may contain less than 0.001 wt.% of MAG, DAG, DATEM, PGMS and STS. For further example, the foaming liquid creamer may contain less than 0.0001 wt.% of MAG, DAG, DATEM, PGMS and STS. The foaming liquid creamer of the invention may be free from added MAG, DAG, DATEM, PGMS and STS. By the term "free from added" is meant that the creamer composition does not contain any MAG, DAG, DATEM, PGMS and STS which have been added as such or are in amounts sufficient to substantially affect the stability of the creamer emulsion. A creamer free from added MAG, DAG, DATEM, PGMS and STS may contain minor amounts of these emulsifiers which do not substantially affect the stability of the emulsion, but which are present e.g. as minor impurities of one or more of the ingredients of the liquid creamer. For example, vegetable oils may naturally contain small amounts of monoacylglycerols and diacylglycerols. The liquid creamer of the invention may be free from MAG, DAG and DATEM. Monoacylglycerols are also known as monoglycerides and diacylglycerols are also known as diglycerides.

In an embodiment, the foaming liquid creamer contains less than 0.01 wt.% (for example less than 0.001 wt.%, for further example less than 0.0001 wt.%) of low molecular weight emulsifiers. In the context of the present invention the term low molecular mass emulsifiers refers to emulsifiers with a molecular mass below 1500 Dalton. Proteins according to the invention are not low molecular mass emulsifiers.

The foaming liquid creamer comprises starch at a level from 0.1 to 2.5 % (for example 0.5 to 1.2 %) as a weight percentage of the foaming liquid creamer.

In an embodiment the starch is selected from the group consisting of rice starch, tapioca starch, potato starch, corn starch, and/or combinations thereof. The starch may be a native starch, a physically modified starch or a chemically modified starch. For example the starch may be a native starch. In an embodiment, the foaming liquid creamer consists of full fat milk and starch. In a further embodiment the liquid creamer of the invention contains less than 0.01 wt.% polysaccharides other than starch, for example less than 0.001 wt.% polysaccharides other than starch. In a still further embodiment the liquid creamer of the invention on a dry basis consists of one or more milk components, fat and starch.

In an embodiment the foaming liquid creamer comprises a polysaccharide selected from the group consisting of gellan gum (for example high-acyl gellan gum), guar gum, acacia senegal gum, xanthan gum and combinations of these. For example the foaming liquid creamer may comprise high acyl gellan gum, for example at a level between 0.1 and 1% as a weight percentage of the foaming liquid creamer.

It was surprisingly found that cellulose and alginate, in combination with protein and fat at a specific range of concentrations, provide a liquid creamer having good foamability upon shaking by hand. The creamer provides a good foam layer on cold or hot beverages. The foaming liquid creamer also has good shelf life stability and does not compromise texture and whitening capacity when added to hot beverages such as coffee. The whitened coffee has no instability issues such as feathering and/or de-oiling. The foaming liquid creamer comprises cellulose at a level from 0.1 to 0.3 % and alginate at a level from 0.1 to 0.3 % as a weight percentage of the foaming liquid creamer. Without wishing to be bound by theory, the cellulose and alginate act to cover the fat droplets in the creamer and reduce the normal antifoaming action of fat. However, the levels of cellulose and alginate need to be carefully controlled, as too much cellulose or alginate would increase the viscosity of the foaming liquid creamer, leading to the disadvantages described above. The cellulose may be microcrystalline cellulose or methyl cellulose.

An aspect of the invention provides a foaming liquid creamer comprising protein, starch, cellulose (for example microcrystalline cellulose), alginate and fat wherein the protein is present at a level from 1 to 6 % (for example 1.5 to 3.5 %), the starch is present at a level from 0.1 to 2.5 % (for example 0.2 to 2.5 %, for further example 0.5 to 1.2 %), the cellulose is present at a level from 0.1 to 0.3 %, the alginate is present at a level from 0.1 to 0.3 %, and the fat is present at a level from 1.0 to 8 %; all percentages being as a weight percentage of the foaming liquid creamer.

Cellulose and alginate, in combination with protein and fat at a specific range of concentrations, provides a foaming liquid creamer which has food foamability and is stable without the addition of further polysaccharides such as high-acyl gellan, guar gum or acacia senegal gum. This is advantageous as consumers desire products with short lists of ingredients.

In an embodiment, the liquid creamer of the invention contains less than 0.001 wt.% polysaccharides other than cellulose and alginate, for example less than 0.0001 wt.% polysaccharides other than cellulose and alginate. The liquid creamer of the invention may be free from added polysaccharides other than alginate and cellulose, for example it may be free from polysaccharides other than alginate and cellulose. In the context of the present invention the term polysaccharide refers to saccharide polymers of more than 10 monosaccharide units.

Alginate is a polysaccharide distributed widely in the cell walls of brown algae which is hydrophilic and forms a viscous gum when hydrated. Alginate provides a desirable rheology of the foaming liquid creamer and a good foam stability. The alginate may be sodium alginate or calcium alginate.

Advantageously, the foaming liquid creamer of the invention is stable without requiring pH buffering ingredients that may be badly perceived by consumers such as phosphate salts. For example it may be stable during storage at refrigeration and ambient temperatures for at least 6 months. For example it may be stable when added to cold or hot coffee or tea. In an embodiment the liquid creamer contains less than 0.001 wt.% (for example less than 0.0001 wt.%) phosphate salts. The liquid creamer of the invention may be free from added phosphate salts, for example the liquid creamer of the invention may be free from phosphate salts. Phosphate salts include monosodium phosphate, monopotassium phosphate, disodium phosphate, dipotassium phosphate, trisodium phosphate, tripotassium phosphate, sodium hexametaphosphate, potassium hexametaphosphate, sodium tripolyphosphate, potassium tripolyphosphate, sodium pyrophosphate, potassium pyrophosphate, sodium hexametaphosphate and potassium hexametaphosphate. In one embodiment a creamer composition according to the invention is free of added monosodium phosphate, monopotassium phosphate, disodium phosphate, dipotassium phosphate, trisodium phosphate, tripotassium phosphate, sodium hexametaphosphate, potassium hexametaphosphate, sodium tripolyphosphate, potassium tripolyphosphate, sodium pyrophosphate, potassium pyrophosphate, sodium hexametaphosphate and potassium hexametaphosphate.

In an embodiment, the foaming liquid creamer has a pH from 6.5 to 7.0, for example from 6.6 to 6.8.

In an embodiment the foaming liquid creamer comprises bicarbonate salt at a level from 0.03 to 0.15 % as a weight percentage of the foaming liquid creamer.

In an embodiment, the protein is milk protein. The milk protein may be provided in the form of ingredients selected from the group consisting of cream, full cream milk, skimmed milk, buttermilk (the liquid phase of the butter churning process), whey (for example sweet whey) and combinations of these. These ingredients may be provided in powdered or liquid form.

In an embodiment, the protein is plant protein, for example the plant protein may be a plant protein selected from soy protein, rice protein, pea protein, chickpea protein, potato protein, canola protein, hemp protein, oat protein, flaxseed protein, faba bean protein, lentil protein, and combinations thereof. The plant protein may be hydrolysed.

In an embodiment, the foaming liquid creamer can be foamed by shaking by hand, for example in a closed container. The foaming liquid creamer may be capable of being foamed by shaking by hand at refrigerator temperatures, such as 4-8 °C. For creamers according to the invention having optimized viscosity, shaking in a bottle is capable of incorporating nearly all the air from the headspace, up to around 45%. Shaking means to move or sway with short, quick, irregular vibratory movements. The foaming liquid creamer of the invention may provide a foam after being shaken at least 5 times (5 movements up and down), at least 10 times, at least 15 times or at least 20 times. Shaking the beverage in a closed container by hand may be done by holding the container in the hand, and bending and stretching the arm multiple times in a horizontal direction, for instance 20 times over 5 seconds. When shaking the creamer in that manner, a percent of gas incorporated of 7 and 45% can be achieved, for example 10 to 40%, for further example 25 to 35 %.

The percent of incorporated gas is measured as follows: a volume V of the beverage is measured before shaking ($V_o$). The product is shaken 20 times by hand. The volume V of the shaken beverage with air is also measured ($V_f$). The percentage of incorporated gas is the result of following equation:

$$\text{Gas incorporated} = (V_f - V_o)/V_f \times 100$$

where:

$V_o$ = initial volume of the creamer (non-aerated creamer)
$V_f$ = final volume of shaken creamer (aerated creamer)

An important aspect of the foaming liquid creamer of the invention is the ability to form a foam layer on a beverage, and the height and stability of that foam layer. An assessment of foam height may be performed as follows. 40 g of roast and ground coffee is brewed with 1.5 L of water. 165 g of this brewed coffee is poured into a straight-sided glass mug with a diameter of 7 cm. Any bubbles are removed with a pipette and the weight of brewed coffee adjusted to 160 g. Foaming liquid creamer in a bottle is shaken by hand horizontally 20 times over 5 seconds. The headspace in the bottle may for example be 30 or 35 vol%. 80 g of the foamed liquid creamer is poured into the coffee. The temperature of the brewed coffee is 60-70°C. The coffee and creamer are stirred three times. The foam height is measured. In an embodiment the liquid foaming creamer of the invention provides a foam height (for example as a layer) greater than 0.8 cm (for example greater than 1 cm) in a 7 cm diameter cylindrical vessel (for example a glass vessel) when 80 g liquid foaming creamer is added to 160 g coffee at 60-70°C after shaking by hand horizontally 20 times over 5 seconds in a bottle with a 35 volume % headspace. In an embodiment the liquid foaming creamer of the invention provides a foam volume greater than 30 cm$^3$ (for example greater than 38.5 cm$^3$) when 80 g liquid foaming creamer is added to 160 g coffee at 60-70°C (for example in a 7 cm diameter cylindrical vessel such as a glass vessel) after shaking by hand horizontally 20 times over 5 seconds in a bottle with a 35 volume % headspace.

In an embodiment the fat is selected from the group consisting of milk fat, coconut oil, high oleic canola oil, high oleic soybean oil, high oleic sunflower oil, high oleic safflower oil and combinations of these. For example, the fat may be selected from the group consisting of coconut oil, high oleic canola oil, high oleic sunflower oil, high oleic safflower oil and combinations of these. The fat may be milk fat. The milk fat may be provided in a form selected from the group consisting of butter oil, butter, cream, full cream milk and combinations of these.

In the context of the present invention, the term fat refers to triglycerides. Fats are the chief component of animal adipose tissue and many seeds. Fats which are generally encountered in their liquid form are commonly referred to as oils. In the present invention the terms oils and fats are interchangeable.

The foaming liquid creamer of the invention may comprise a sweetener, for example a sweetener found in nature. The foaming liquid creamer of the invention may comprise a sweetener in an amount from 0.01 to 20 wt%. In an embodiment, the foaming liquid creamer comprises a sweetener selected from the group consisting of sucrose, fructose, glucose, hydrolysed starch syrup (for example with a dextrose equivalent (DE) value between 40 and 100), allulose, sorbitol, maltitol, erythritol, mogrosides, steviol glycosides and combinations of these. The foaming liquid creamer may for example comprise a sweetener selected from the group consisting of sucrose, fructose, glucose, allulose, sorbitol, maltitol, erythritol, mogrosides, steviol glycosides and combinations of these.

Sucrose may be present in an amount from 0.5 to 20 wt.%, for example from 1 to 15 wt.%. Sucrose may be the form of cane sugar, beet sugar or molasses; for example the sweetener according to the invention may be cane sugar, beet sugar or molasses. A sweetener selected from the group consisting of fructose, glucose, sucrose or combinations of these may be present in an amount from 0.5 to 20 wt.%, for example from 1 to 15 wt.%. Fructose, glucose or sucrose may be comprised within agave syrup, accordingly the sweetener according to the invention may be agave syrup. Fructose and glucose are components of honey, accordingly the sweetener according to the invention may be honey. Sorbitol, maltitol and erythritol are found in fruits or can be produced by enzymatic reactions from natural starting materials. Mogrosides are found in monk fruit (the fruit of *Siraitia grosvenorii*). Accordingly the sweetener according to the invention may be monk fruit juice. Steviol glycosides are found in the leaves of stevia (*Stevia rebaudiana*). Accordingly the sweetener according to the invention may be stevia or an extract of stevia. In an embodiment, the foaming liquid creamer is free from sucrose.

In an embodiment, the foaming liquid creamer comprises from 5 to 20 wt.% of saccharides, for example saccharides having ten or fewer monosaccharide units such as maltodextrin, sucrose, lactose, fructose and glucose. For example the creamer may comprise from 5 to 20 wt.% of sucrose.

In an embodiment the foaming liquid creamer is free from added solid particulate whiteners, for example the liquid creamer is free from solid particulate whiteners. The oil droplets of the liquid creamer and the air cells of the foam interact with light falling on the creamer so that the creamer appears white. It is advantageous that the foaming liquid creamer of the invention appears white and maintains its whiteness on storage without the need to add solid particulate whiteners. Solid particulate whiteners such as titanium dioxide provide excellent whitening power, but are avoided by some consumers who consider them to be synthetic.

The foaming liquid creamer of the invention has good stability, for example it may have a shelf-life of at least 6 months at 4, 20 or 30 °C. In an embodiment the foaming liquid creamer is a refrigerated liquid creamer, for example it may have a shelf-life of at least 3 months (for example at least 6 months) at 4 °C. It is also advantageous that the liquid creamer is able to withstand heat treatments necessary to kill or reduce spoilage organisms.

In an embodiment, the foaming liquid creamer has from 20 to 40 % total solids content, for example from 22 to 35 %, for further example from 25 to 29 %.

An aspect of the invention provides a process of preparing the liquid creamer of the invention comprising; mixing the composition of the foaming liquid creamer at a solids content from 20 to 40 % (for example from 22 to 35 %, for further example from 25 to 29 %); sterilizing the resulting liquid using ultra-high temperature (UHT) treatment; homogenizing the liquid; wherein the homogenization is performed before UHT treatment, after UHT treatment, or before and after UHT treatment. The UHT treatment may for example be a treatment of between 1 and 12 seconds at between 120 and 150 °C, for further example a treatment of between 2 and 5 seconds between 135 and 145 °C.

In an embodiment of the process of the invention, the foaming liquid creamer is filled into a container which is then closed, leaving a headspace representing 15 to 40% of the internal volume of the container.

In an embodiment, the foaming liquid creamer may be aseptically filled into a container, which is then aseptically sealed. The foaming liquid creamer may be cooled before being filled into a container. For example, the aseptic filling may be performed at 0.5 -10°C.

In an embodiment, filling may be performed under a controlled atmosphere, to flush oxygen out of the headspace. For instance, a nitrogen atmosphere may be used as a controlled atmosphere. The container is then sealed. When the container is a bottle, sealing can be done with a standard screw lid. When the container is a cup, sealing can be done with a standard foil seal.

In another embodiment, sterilization can be performed by retorting. In this case after dissolving the ingredients of the foaming creamer in water under agitation, the resulting liquid may be pre-heated at 60-80°C, homogenised; filled in cans or glass containers, retorted at 121°C for 15 min, and cooled at 25°C or lower temperature.

To allow gas incorporation after physically shaking the creamer container, the container needs to contain a headspace above the creamer. An aspect of the invention provides a packaged foaming liquid creamer comprising the foaming liquid creamer of the invention within a closed container, the closed container having a headspace, wherein the headspace represents from 15 to 40 %, 20 to 38 vol.% or 25 to 35 vol.% of the internal volume of the container. The inventors have found that if the headspace is too small, then the closed container does not contain enough gas to provide a pleasant aerated texture upon shaking. For instance, it was found that a headspace of less than 15 vol.% was too low to provide a pleasant aerated texture after shaking. Therefore, the headspace represents preferably at least 15 % by volume (vol.%) of the internal volume of the container.

On the other hand, if the headspace is too large, it may have several undesirable consequences. First, the consumer could consider that the container is not filled enough. Second, a large headspace can only be provided with a large container. This increases the cost of packaging and the amount of waste. Third, the inventors have found that if the headspace is too large, then the container tends to squash itself over shelf life. Without wishing to be bound by theory, the inventors believe this is due to oxygen consumption. During shelf life, the oxygen in the headspace may react with the creamer. This reduces the internal pressure in the headspace, thereby provoking a "vacuum" effect. For instance, containers with a headspace of above 40 vol.-% showed an unacceptable vacuum effect and squashing over shelf life. This could be solved by flushing the headspace with nitrogen for instance, during filling and sealing of the container. It was found that a good balance is achieved between these undesirable consequences, industrialisation considerations and the need to provide sufficient gas for aeration when the headspace represents up to 40 vol.% of the volume of the container. The container may for example be a bottle or a cup.

In an embodiment, the headspace represents from 15 to 40 vol.% of the internal volume of the container. In other words, if the container has an internal volume of 800 mL, then the headspace represents from 120 mL to 320 mL, and the remainder is the creamer (680 mL to 480 mL). Preferably, the headspace represents from 20 to 40 % of the internal volume of the container, more preferably, from 30 to 37 % of the internal volume of the container. The internal volume of the container is the volume it contains, and is often simply referred to as the volume of the container.

When the container is a plastic bottle such as a PET (polyethylene terephthalate) bottle, it may be desirable to provide it with strengthening features, such as ribs.

In an embodiment, the closed container has a volume of 800 ml or 28oz. In an embodiment, the closed container has a volume of 450 ml or 16oz. In an embodiment, the closed container has a volume of 330 ml.

The packaged foaming liquid creamer of the present invention may be refrigerated (for example at 4-8°C) prior to shaking, so that the creamer is chilled for consumption.

Particularly good results in terms of surface foam layer generation and also in terms of shelf life are obtained when the headspace comprises gas selected from the group consisting of nitrogen, argon, air and/or combinations of thereof. In an embodiment, the headspace comprises gas, the gas comprising less than 3% oxygen.

In an embodiment, the closed container of the packaged foaming liquid creamer is not pressurized, for example the container has an internal pressure similar to atmospheric pressure, for example between 800 and 1200 mbar$_a$. An example of a pressurized container for a foaming liquid creamer is a can with a pressurized propellant gas such as nitrous oxide. A foam is produced as the creamer, mixed with gas, passes through a dispensing nozzle and expands into atmospheric pressure. This is an efficient way of producing a foam, but such pressurized containers for liquid creamers may not be desired by consumers keen to reduce the packaging associated with the products they buy and to reduce their impact on the environment. Pressurized dispensers are generally heavy and relatively expensive. It is advantageous that the foaming liquid creamer of the invention is capable of being foamed without the need for pressurization.

Those skilled in the art will understand that they can freely combine all features of the present invention disclosed herein. In particular, features described for the product of the present invention may be combined with the process of the present invention and vice versa. Further, features described for different embodiments of the present invention may be combined. Where known equivalents exist to specific features, such equivalents are incorporated as if specifically referred to in this specification.

Further advantages and features of the present invention are apparent from the figure and non-limiting examples.

## **Examples**

*Example 1: Influence of viscosity on air incorporation and foam pouring*

Full fat milk UHT treated with a standardized fat content of 3.5% was poured in a beaker and starch was added to it. The mixture was stirred for 15 minutes at room temperature. Therefore, the liquid was heated up to 68°C on a heating plate, while the magnet kept stirring the mixture. The beaker was covered with aluminium foil to avoid excessive evaporation while heating. Once the target temperature was reached, the mixture was kept at 68±0.1°C for 30 minutes while continuous stirring was occurring. Then, the sample was cooled down to 4°C in an ice bath.

The viscosity was adjusted with different starch level additions ranging from 0% to 4%, hence ranging from 3 mPas to 50 mPa.s at 10/s shear rate performing the measurement at 8°C.

The foam volume was measured as follows.

An 854 ml bottle was filled with the sample leaving a headspace of 30%. The bottle was shaken for 5 seconds at 4°C. 80g was then poured into a 100mL graduated cylinder. The upper foam level was immediately noted without taking into account the meniscus and the bottom level was noted once clearly visible to the naked eye. The foam volume was calculated from the upper and lower marks. The test was performed in triplicate and a mean taken.

The viscosity of the samples was measured at a temperature of 8°C, using a concentric cylinder geometry (also named Couette), which was then set to rotate to impose constant shear rate values in the range 1 - 100 /s. The viscosity value was taken at a shear rate of 10/s.

Figure 1 shows the volume of foam (mL) that was on top of the liquid poured out as a function of viscosity (Pa.s). The foam layer volume after pouring was best above 5 mPa.s (0.005 Pa.s) and below 90 mPa.s (0.09 Pa.s).

*Example 2: Foaming liquid creamers*

Foaming liquid creamers were prepared by the following process:
Full fat milk pasteurized with a standardized fat content of 3.4% and/or water were poured in a small tank. Dry ingredients were added, followed by heat treated cream. The mixture was stirred for 15 minutes at room temperature. Thereafter, the liquid was UHT processed to 140-143°C and held for between 2 and 5 seconds. Then, the liquid was homogenized and cooled down to 10°C and filled in PET bottles. Example E is not in the scope of the present invention.

Samples were prepared with the following compositions:

| Sample | A | B | C | D | E | Comparative F | Comparative G |
|---|---|---|---|---|---|---|---|
| Cream | 7% | 7% | 7.6% | 8.1% | 0% | 2.2% | 8.5% |
| Fresh milk | 65% | 65% | 60% | 49% | 50% | 74% | 71% |
| Sodium Caseinate | - | - | 1% | - | - | - | - |
| Skimmed milk powder | 1% | 2.5% | - | 2.7% | 2.7% | 2.7% | - |
| Whey powder | - | - | - | - | - | - | 0.99% |
| Starch (native) | 1% | 1% | 2% | 2% | 3% | 3% | 3% |
| Microcryst. cellulose | 0.195% | 0.195% | 0.195% | 0.195% | - | 0.195% | 0.325% |
| Alginate (Na and Ca) | 0.09% | 0.09% | 0.09% | 0.09% | - | 0.09% | 0.15% |
| High acyl gellan | - | - | - | - | 0.125% | - | - |
| $NaHCO_3$ | - | - | 0.05% | 0.05% | 0.05% | 0.05% | 0.05% |
| Sucrose | 15% | 15% | 15% | 20% | 15% | 15% | 15% |
| Resulting protein level | 2.57% | 3% | 3% | 2.5% | 2.5% | 3.5% | 3.5% |
| Resulting fat level | 5% | 5% | 5% | 5% | 1% | 1% | 5% |

All percentages as weight percent of total foaming creamer.

The viscosity of the samples was measured at a temperature of 4°C in the un-foamed state (e.g. before shaking) with a Physica MCR 302 rheometer (Anton Paar GmbH, Austria), using a double-gap geometry (DG26.7) and a shear rate of 75/s.

The foam height was measured as follows. 40 g of roast and ground coffee was brewed with 1.5 L of water. 165 g of this brewed coffee was poured into a straight-sided glass mug with a diameter of 7 cm. Any bubbles were removed with a pipette and the weight of brewed coffee adjusted to 160 g. Foaming liquid creamer at 4°C in a 854 ml bottle was shaken by hand horizontally 20 times over 5 seconds. The headspace in the bottle was 35 vol%. 80 g of the foamed liquid creamer was poured into the coffee. The temperature of the brewed coffee was 60-70°C. The coffee and creamer were stirred three times. The foam height was measured.

Results are in the table below.

| Sample | A | B | C | D | E | Comparative F | Comparative G |
|---|---|---|---|---|---|---|---|
| Total solids | 28.4% | 30.2% | 29.2% | 34.6% | 25.9% | 28.8% | 30.1% |
| Viscosity /mPa.s at 4°C | 16.7 | 20.0 | 71.2 | 71.4 | 85.5 | 94.8 | 174 |
| Foam height/cm | 0.8 | 0.95 | 0.9 | 0.6 | 0.45 | 0.4 | 0 |

Sample F, with a viscosity of 94.8 mPa.s at 4°C produced a small foam layer when poured onto the coffee. For sample G, with a viscosity of 174 mPa.s at 4°C, the bubbly liquid poured out of the bottle dispersed into the coffee without forming a foam layer.

*Example 3: Influence of starch level*

Foaming liquid creamers with varying starch levels were prepared and measured as in Example 2, with compositions as listed in the table below: Examples J and K are not in the scope of the present invention.

| Sample | H | I | J | K |
|---|---|---|---|---|
| Cream | 8.7% | 8.7% | 8.7% | 8.7% |

(continued)

| Sample | H | I | J | K |
|---|---|---|---|---|
| Fresh milk | 45.5% | 45.5% | 45.5% | 45.5% |
| Skimmed milk powder | 2.7% | 2.7% | 2.7% | 2.7% |
| Starch (native) | 1.0% | 1.5% | 3.5% | 4.0% |
| Microcrystalline cellulose | 0.195% | 0.195% | 0.195% | 0.195% |
| Alginate (Na and Ca) | 0.09% | 0.09% | 0.09% | 0.09% |
| $NaHCO_3$ | 0.05% | 0.05% | 0.05% | 0.05% |
| Sucrose | 15% | 15% | 15% | 15% |
| Resulting protein level | 2.5% | 2.5% | 2.5% | 2.5% |
| Resulting fat level | 5% | 5% | 5% | 5% |

All percentages as weight percent of total foaming creamer.

Results

| Sample | H | I | J | K |
|---|---|---|---|---|
| Total solids | 28.4% | 28.9% | 30.9% | 31.4% |
| Viscosity /mPa.s | 26.7 | 43.1 | 285 | 425 |
| Foam height/cm | 1.1 | 0.9 | 0 | 0 |

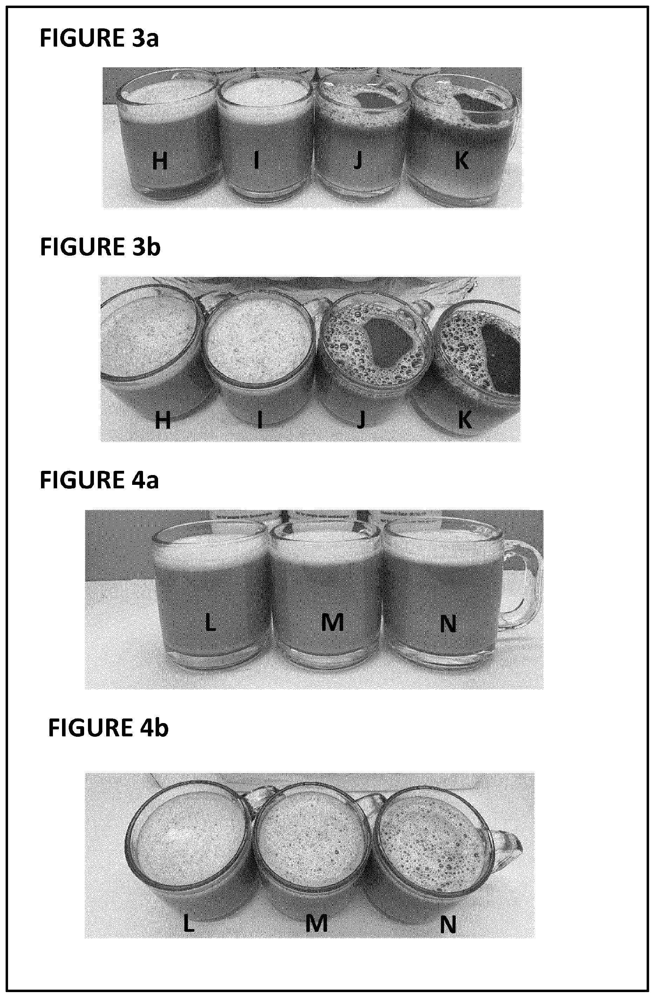

The resulting coffees with added liquid foaming creamer are shown in Figure 3. Sample H and I perform best, with 1 and 1.5% starch in the composition and a viscosity below 90 mPa.s but above 5 mPa.s. Sample J and K have no top foam layer and a white creamer layer can be seen towards the bottom of the coffee liquid.

*Example 4: Influence of methyl cellulose and alginate level*

Foaming liquid creamers with varying levels of methyl cellulose and alginate were prepared and measured as in Example 2, with compositions as listed in the table below:

| Sample | L | M | N |
|---|---|---|---|
| Cream | 8.7% | 8.7% | 8.7% |
| Fresh milk | 45.5% | 45.5% | 45.5% |
| Skimmed milk powder | 2.7% | 2.7% | 2.7% |
| Starch (native) | 2% | 2% | 2% |
| Microcrystalline cellulose | 0.065% | 0.113% | 0.26% |
| Alginate (Na and Ca) | 0.03% | 0.06% | 0.12% |
| $NaHCO_3$ | 0.05 | 0.05 | 0.05 |
| Sugar | 15% | 15% | 15% |
| Resulting protein level | 2.5% | 2.5% | 2.5% |
| Resulting fat level | 5% | 5% | 5% |

All percentages as weight percent of total foaming creamer.

Results

| Sample | L | M | N |
|---|---|---|---|
| Total solids | 29.2% | 29.3% | 29.5% |
| Viscosity /mPa.s | 52 | 52.6 | 88.1 |
| Foam height/cm | 0.9 | 0.7 | 0.6 |

The resulting coffees with added liquid foaming creamer are shown in Figure 4. Samples L and M perform best. Although the foam height for sample N is 0.6 cm, the foam coverage is patchy.

*Example 5: Milk and starch creamers*

Full fat pasteurized milk with a standardized fat content of 3.4% was poured in a small tank and starch added at either 1% (Sample O) or 2% (Sample P) by weight. The mixture was stirred for 15 minutes at room temperature. Thereafter, the liquid was UHT processed to 140-143°C and held for between 2 and 5 seconds. Then, the liquid was homogenized and cooled down to 10°C and filled in PET bottles.

Viscosity and foam height were measured as in Example 2.

| Sample | O | P |
|---|---|---|
| Viscosity /mPa.s | 14.7 | 32 |
| Foam height/cm | 0.9 | 1.0 |

**Claims**

1. Foaming liquid creamer comprising protein and fat wherein

   the protein is present at a level from 1 to 6 %;
   the fat is present at a level from 1 to 8 %;
   the foaming liquid creamer contains less than 0.01 % of monoacylglycerols, diacylglycerols, diacetylated tartaric acid esters of monoglycerides, propylene glycol monostearate and sorbitan tristearate;
   the foaming liquid creamer comprises starch at a level from 0.1 to 2.5 %; and
   the foaming liquid creamer in an un-foamed state has a viscosity at 4°C of between 5 to 90 mPa.s;
   wherein the foaming liquid creamer comprises cellulose at a level from 0.1 to 0.3 % and alginate at a level from 0.1 to 0.3 % as a weight percentage of the foaming liquid creamer;
   all percentages being as a weight percentage of the foaming liquid creamer, and the viscosity is measured as set out in the specification.

2. The foaming liquid creamer according to claim 1 wherein the protein is milk protein.

3. The foaming liquid creamer according to claim 1 or 2 wherein the creamer can be foamed by shaking by hand.

4. The foaming liquid creamer according to any one of claims 1 to 3 wherein the fat is selected from the group consisting of milk fat, coconut oil, high oleic canola oil, high oleic soybean oil, high oleic sunflower oil, high oleic safflower oil and combinations of these.

5. The foaming liquid creamer according to any one of claims 1 to 4 comprising a sweetener selected from the group consisting of sucrose, fructose, glucose, allulose, sorbitol, maltitol, erythritol, mogrosides, steviol glycosides and combinations of these.

6. The foaming liquid creamer according to any one of claims 1 to 5 wherein the creamer is free from added solid particulate whiteners.

7. The foaming liquid creamer according to any one of claims 1 to 6 wherein the creamer is a shelf-stable liquid creamer.

8. The foaming liquid creamer according to any one of claims 1 to 7 comprising bicarbonate salt at a level from 0.03 to 0.15 % as a weight percentage of the foaming liquid creamer.

9. Process of preparing the foaming liquid creamer according to any one of claims 1 to 8 comprising:

   mixing the composition of the foaming liquid creamer at a solids content from 20 to 40 %;
   sterilizing the resulting liquid using ultra-high temperature (UHT) treatment;
   homogenizing the liquid;
   wherein the homogenization is performed before UHT treatment, after UHT treatment, or before and after UHT treatment.

10. The process according to claim 9 wherein the foaming liquid creamer is filled into a container which is then closed, leaving a headspace representing 15 to 40 % of the internal volume of the container.

11. The process according to claim 10 wherein the container is aseptically filled and sealed.

12. A packaged foaming liquid creamer comprising the foaming liquid creamer of any one of claims 1 to 8 within a closed container, the closed container having a headspace, wherein the headspace represents from 15 to 40 % of the internal volume of the container.

13. The packaged foaming liquid creamer according to claim 12 wherein the container is not pressurized.

**Patentansprüche**

1. Schäumender flüssiger Kaffeeweißer, umfassend Protein und Fett, wobei

   das Protein in einem Gehalt zwischen 1 und 6 % vorhanden ist;
   das Fett in einem Gehalt von 1 bis 8 % vorhanden ist;
   der schäumende flüssige Kaffeeweißer weniger als 0,01 % Monoacylglycerine, Diacylglycerine, diacetylierte Weinsäureester von Monoglyceriden, Propylenglycolmonostearat und Sorbitantristearat enthält;
   der schäumende flüssige Kaffeeweißer Stärke in einem Gehalt von 0,1 bis 2,5 % umfasst; und
   der schäumende flüssige Kaffeeweißer in einem nicht geschäumten Zustand bei 4 °C eine Viskosität zwischen 5 bis 90 mPa.s aufweist;
   wobei der schäumende flüssige Kaffeeweißer Zellulose in einem Gehalt von 0,1 bis 0,3 % und Alginat in einem Gehalt von 0,1 bis 0,3 % als einen Gewichtsprozentsatz des schäumenden flüssigen Kaffeeweißers umfasst;
   sämtliche Prozentsätze als ein Gewichtsprozentsatz des schäumenden flüssigen Kaffeeweißers sind und die Viskosität wie in der Patentschrift angegeben gemessen wird.

2. Schäumender flüssiger Kaffeeweißer nach Anspruch 1, wobei das Protein Milchprotein ist.

3. Schäumender flüssiger Kaffeeweißer nach Anspruch 1 oder 2, wobei der Kaffeeweißer durch Schütteln mit der Hand geschäumt werden kann.

4. Schäumender flüssiger Kaffeeweißer nach einem der Ansprüche 1 bis 3, wobei das Fett aus der Gruppe ausgewählt ist, bestehend aus Milchfett, Kokosöl, Rapsöl mit hohem Ölsäureanteil, Sojaöl mit hohem Ölsäureanteil, Sonnenblumenöl mit hohem Ölsäureanteil, Safloröl mit hohem Ölsäureanteil und Kombinationen davon.

5. Schäumender flüssiger Kaffeeweißer nach einem der Ansprüche 1 bis 4, umfassend ein Süßungsmittel, das aus der Gruppe ausgewählt ist, bestehend aus Saccharose, Fructose, Glucose, Allulose, Sorbit, Maltit, Erythrit, Mogrosiden, Steviolglycosiden und Kombinationen davon.

6. Schäumender flüssiger Kaffeeweißer nach einem der Ansprüche 1 bis 5, wobei der Kaffeeweißer frei von hinzugefügten festen Weißern ist.

7. Schäumender flüssiger Kaffeeweißer nach einem der Ansprüche 1 bis 6, wobei der Kaffeeweißer ein haltbarer flüssiger Kaffeeweißer ist.

8. Schäumender flüssiger Kaffeeweißer nach einem der Ansprüche 1 bis 7, umfassend Bicarbonatsalz in einem Gehalt von 0,03 bis 0,15 % als ein Gewichtsprozentsatz des schäumenden flüssigen Kaffeeweißers.

9. Verfahren zum Herstellen des schäumenden flüssigen Kaffeeweißers nach einem der Ansprüche 1 bis 8, umfassend:

Mischen der Zusammensetzung des schäumenden flüssigen Kaffeeweißers mit einem Feststoffgehalt von 20 bis 40 %;
Sterilisieren der resultieren Flüssigkeit unter Verwendung einer Ultrahocherhitzungsbehandlung (UHT-Behandlung); Homogenisieren der Flüssigkeit;
wobei die Homogenisierung vor der UHT-Behandlung, nach der UHT-Behandlung oder vor und nach der UHT-Behandlung durchgeführt wird.

10. Verfahren nach Anspruch 9, wobei der schäumende flüssige Kaffeeweißer in einen Behälter gefüllt wird, der dann verschlossen wird, wobei ein Kopfraum hinterlassen wird, der 15 bis 40 % des Innenvolumens des Behälters darstellt.

11. Verfahren nach Anspruch 10, wobei der Behälter aseptisch gefüllt und versiegelt wird.

12. Verpackter, schäumender flüssiger Kaffeeweißer, umfassend den schäumenden flüssigen Kaffeeweißer nach einem der Ansprüche 1 bis 8 innerhalb eines geschlossenen Behälters, wobei der geschlossene Behälter einen Kopfraum aufweist, wobei der Kopfraum von 15 bis 40 % des Innenvolumens des Behälters darstellt.

13. Verpackter schäumender flüssiger Kaffeeweißer nach Anspruch 12, wobei der Behälter nicht unter Druck steht.

**Revendications**

1. Succédané de lait liquide moussant comprenant des protéines et des matières grasses, dans lequel

la protéine est présente à un taux compris entre 1 et 6 % ;
la matière grasse est présente à un taux compris entre 1 et 8 % ;
le succédané de lait liquide moussant contient moins de 0,01 % de monoacylglycérols, de diacylglycérols, d'esters d'acide diacétyle tartrique de monoglycérides, de monostéarate de propylène glycol et de tristéarate de sorbitan ;
le succédané de lait liquide moussant comprend de l'amidon à un taux compris entre 0,1 et 2,5 % ; et
le succédané de lait liquide moussant à l'état non moussé a une viscosité à 4 °C comprise entre 5 et 90 mPa.s ;
dans lequel le succédané de lait liquide moussant comprend de la cellulose à un taux compris entre 0,1 et 0,3 % et de l'alginate à un taux compris entre 0,1 et 0,3 % en pourcentage de poids du succédané de lait liquide moussant ;
tous les pourcentages sont exprimés en pourcentage de poids du succédané de lait liquide moussant, et la viscosité est mesurée comme indiqué dans la spécification.

2. Succédané de lait liquide moussant selon la revendication 1, dans lequel la protéine est une protéine de lait.

3. Succédané de lait liquide moussant selon la revendication 1 ou 2, dans lequel le succédané de lait peut être moussé en le secouant à la main.

4. Succédané de lait liquide moussant selon l'une quelconque des revendications 1 à 3, dans lequel la matière grasse est choisie dans le groupe constitué de matière grasse de lait, huile de coco, huile de canola à haute teneur en acide oléique, huile de soja à haute teneur en acide oléique, huile de tournesol à haute teneur en acide oléique, huile de carthame à haute teneur en acide oléique et des combinaisons de celles-ci.

5. Succédané de lait liquide moussant selon l'une quelconque des revendications 1 à 4, comprenant un édulcorant choisi dans le groupe constitué de saccharose, fructose, glucose, allulose, sorbitol, maltitol, érythritol, mogrosides, glycosides de stéviol et des combinaisons de ceux-ci.

6. Succédané de lait liquide moussant selon l'une quelconque des revendications 1 à 5, dans lequel le succédané de lait est dépourvu d'agents de blanchiment de particules solides ajoutés.

**7.** Succédané de lait liquide moussant selon l'une quelconque des revendications 1 à 6, dans lequel le succédané de lait est un succédané de lait liquide à longue durée de conservation.

**8.** Succédané de lait liquide moussant selon l'une quelconque des revendications 1 à 7, comprenant du sel de bicarbonate à un taux compris entre 0,03 et 0,15 % en pourcentage de poids du succédané de lait liquide moussant.

**9.** Procédé de préparation du succédané de lait liquide moussant selon l'une quelconque des revendications 1 à 8, comprenant :

le mélange de la composition du succédané de lait liquide moussant à une teneur en solides comprise entre 20 et 40 % ;
la stérilisation du liquide obtenu à l'aide du traitement à ultra-haute température (UHT) ;
l'homogénéisation du liquide ;
dans lequel l'homogénéisation est effectuée avant traitement UHT, après traitement UHT, ou avant et après traitement UHT.

**10.** Procédé selon la revendication 9, dans lequel le succédané de lait liquide moussant est versé dans un récipient qui est ensuite fermé, laissant un espace libre représentant 15 à 40 % du volume intérieur du récipient.

**11.** Procédé selon la revendication 10, dans lequel le récipient est rempli et scellé de manière aseptique.

**12.** Succédané de lait liquide moussant emballé comprenant le succédané de lait liquide moussant selon l'une quelconque des revendications 1 à 8, dans un récipient fermé, le récipient fermé ayant un espace libre, dans lequel l'espace libre représente de 15 à 40 % du volume intérieur du récipient.

**13.** Succédané de lait liquide moussant emballé selon la revendication 12, dans lequel le récipient n'est pas pressurisé.

# FIGURE 1

# FIGURE 2

## FIGURE 3a

## FIGURE 3b

## FIGURE 4a

## FIGURE 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1226761 A1

- WO 2017211971 A1